# FASCICULE DE BREVET EUROPEEN

(11) **EP 0 813 495 B1**
(45) Date de publication et mention de la délivrance du brevet: **17.04.2002**
(21) Numéro de dépôt: 97900221.9
(22) Date de dépôt: 02.01.1997
(51) Int. Cl.: B65G 65/23, B65G 65/34

(54) **DISPOSITIF DE TRANSFERT ET DE MELANGE DE PRODUITS PULVERULENTS**
MISCH-UND ÜBERGABEVORRICHTUNG FÜR SCHÜTTGUT
DEVICE FOR TRANSFERRING AND MIXING PULVERULENT PRODUCTS

(30) Priorité: 03.01.1996 FR 9600026
(43) Date de publication de la demande: 29.12.1997
(73) Titulaire: COMPAGNIE GENERALE DES MATIERES NUCLEAIRES, 78140 Velizy Villacoublay (FR)
(72) Inventeur: HEYRAUD, Jacques, F-13770 Venelles (FR)
(74) Mandataire: Des Termes, Monique
(86) Numéro de dépôt international: FR9700003
(87) Numéro de publication internationale: WO9725267

(56) Documents cités:
- FR-A- 2 540 472
- FR-A- 2 617 817
- US-A- 4 569 623
- US-A- 5 302 073

## Description

L'invention a trait à un dispositif de transfert et de mélange de produits pulvérulents, d'abord contenus dans des jarres disposées à un premier emplacement, vers un second emplacement, qui peut être une voie de transport surélevée.

Certains produits sont manipulés dans des enceintes étanches telles que des boites à gants par exemple, ce qui les rend difficiles à transporter. L'invention trouvera emploi dans des circonstances de ce genre : il faut concevoir une machine qui permette de saisir les jarres et de les transporter devant le second emplacement avant de les vider dedans. On exige que l'opération soit parfaitement sûre et ne s'accompagne d'aucune dispersion du contenu de la jarre, qui peut être toxique ou dangereux, ce qui justifie d'ailleurs le recours à un procédé de transfert entièrement automatique. Enfin, on constate que les produits pulvérulents contenus dans les jarres sont souvent mal mélangés, si bien qu'on est amené à confier à la machine une telle opération de mélange avant la vidange dans le second emplacement.

Ces problèmes sont résolus avec l'invention, qui concerne sous sa forme la plus générale un dispositif de transfert et de mélange de produits pulvérulents contenus dans des jarres, comprenant : un corps monté de façon à basculer autour d'un axe horizontal sous l'impulsion d'un premier moteur ; un plateau et une goulotte de distribution montés à deux extrémités opposées du corps, le corps étant traversé par un évidement s'étendant d'une des extrémités à l'autre et le plateau étant traversé par un évidement s'étendant d'une face située devant le corps à un dispositif de serrage à une face porteuse de griffes de saisie d'un col de jarre, les évidements étant en prolongement ; un deuxième moteur faisant tourner le plateau autour d'un axe aligné avec l'évidement de plateau ; une vanne permettant d'ouvrir et de fermer l'évidement, le corps pouvant basculer entre une position où le plateau est situé sous le corps et une position où la goulotte est inclinée vers le bas depuis le corps.

Ce dispositif permet de transférer le produit pulvérulent entre des emplacements assez éloignés ou décalés : le corps peut être monté sur un châssis élévateur pour compenser la différence de niveau entre les deux emplacements, ou abaisser le corps du dispositif sur la jarre qui va être saisie. La vanne a pour fonction de ne pas autoriser l'écoulement hors de la jarre avant le mélange et la fin du basculement du corps.

Les brevets américain 4 569 623 et français 2 617 817 décrivent des dispositifs plus rudimentaires, qui ne se prêtent ni à l'automatisation du transfert (les jarres devant être fixées à la main), ni au mélange préliminaire de la poudre, ni à de larges possibilités de transfert puisque le dispositif a une partie fixe unie à une voie de vidange et n'a pas de vanne grâce à laquelle le contenu de la jarre peut être retenu et confiné dans la machine pendant le déplacement du corps vers la voie de vidange. Enfin, le brevet américain 5 302 073 décrit un dispositif retourneur de récipients pourvu de mécanismes d'étanchéité et conforme à la revendication 1.

Selon le dispositif de l'invention, la vidange est facilitée si la goulotte est montée sur le corps par l'intermédiaire d'un système vibreur.

Selon une variante d'exécution avantageuse de l'invention, les griffes sont montées sur des pivots reliés à une couronne tournant dans le plateau sous l'effet d'un troisième moteur par des galets et des cames qui permettent de basculer les griffes entre une position d'effacement et une position de convergence où le col de jarre est retenu, et entre une position abaissée simultanée à la position d'effacement et une position de serrage simultanée à la position de convergence où le col de jarre est soulevé et pressé contre le plateau autour de l'évidement. Ce mécanisme permet d'arrimer et de désarrimer les jarres automatiquement.

On va maintenant passer aux commentaires des figures suivantes pour une description plus complète d'une réalisation de l'invention :
- la figure 1 est une vue générale de la machine,
- la figure 2 est une vue du corps central et de la goulotte,
- la figure 3 est une coupe diamétrale du plateau,
- et la figure 4 est une vue dans l'axe du plateau du mécanisme de commande des griffes de saisie des jarres.

Des jarres 1 porteuses de poudre éventuellement toxique ou dangereuse sont portées sur une première voie de transport 2 qui passe devant la machine 3 sujet de l'invention. La première voie de transport 2 peut être formée d'un convoyeur à bande sans fin ou par un autre moyen. Ici, il s'agit d'un vérin sur lequel les jarres 1 sont successivement pesées et soulevées. La machine 3 comprend un bâti 4 fixé au sol et porteur de glissières verticales 5 et d'une vis d'Archimède 6, également verticale, que fait tourner un moteur 7. Ce système est destiné à faire monter ou descendre un châssis 8 muni de deux paires de galets 9 qui s'appuient sur les glissières 5 et coulissent sur elles et d'un écrou 10 engagé dans la vis d'Archimède 6. Comme ce genre de système est très connu, il n'est pas représenté plus en détail. Quand le châssis 8 est abaissé, la jarre 1 peut être saisie par la partie inférieure de la partie de machine qui est portée par le châssis 8 et qui constitue un plateau 11 qui sera décrit plus loin. Ce plateau est monté sur un corps principal 12 de la machine par l'intermédiaire d'un moteur 13 fixé à ce corps 12 et dont le pignon 14 entraîne une roue 15 solidaire du plateau 11 pour le faire tourner autour d'un axe, vertical dans cette réalisation. Le plateau 11 est situé sous le corps 12, et une goulotte 16 est fixée sur le corps 12. Un autre moteur 17, fixé au châssis 8 et dont le pignon 18 engrène avec une roue 19 solidaire du corps 12, permet de faire basculer ce dernier et par conséquent le plateau 11 et la goulotte 16 autour d'un axe horizontal.

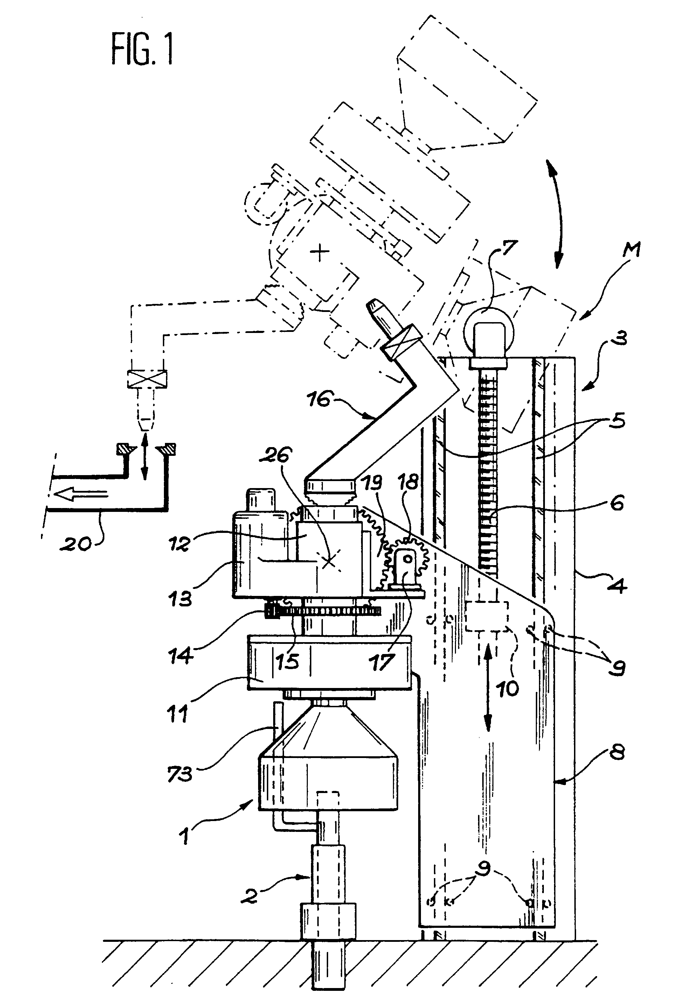

La figure 1 montre que le basculement est produit quand le châssis 8 a été soulevé : l'angle de basculement est de 150° environ, ce qui place la jarre 1 à une forte inclinaison en dessus du plateau 11 et permet à son contenu de s'écouler à travers le plateau 11 et le corps 12, dans la goulotte 16, qui est alors inclinée vers le bas à partir du corps 12. Le contenu de la jarre 1 traverse alors la machine puis la goulotte 16 pour entrer dans une seconde voie de transport 20, le long de la laquelle il est évacué. Il existe une position intermédiaire, figurée en traits mixtes comme la précédente, où la jarre 1 est inclinée sans être renversée ; cette position porte la référence M et correspond au mélange du contenu de la jarre 1 : c'est alors que le plateau 11 tourne ; la jarre 1 est munie à l'intérieur d'ailettes internes verticales ou hélicoïdales qui permettent de soulever des masses de poudre avant de les laisser retomber, ce qui crée le brassage souhaité.

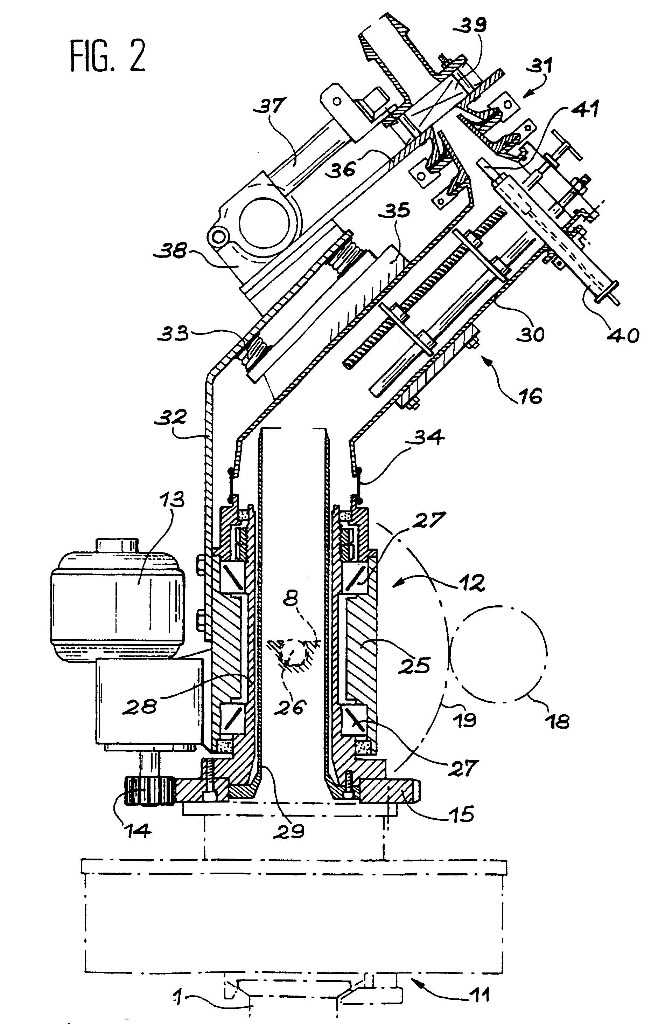

Tel est le fonctionnement de la machine 3, après quoi elle revient à sa position initiale pour reposer la jarre 1 et en saisir une autre après que la jarre 1 vidée a été retirée. Les éléments plus particuliers de la machine 3 vont maintenant être décrits. Le corps 12 comprend, comme on le voit à la figure 2, un fût externe 25 cylindrique duquel dépassent des bouts d'arbre 26 en prolongement soutenus dans des paliers du châssis 8. Le fût externe 25 porte lui-même des roulements 27 destinés au soutien d'un fût interne 28 solidaire du plateau 11 ; de plus, le plateau 11 porte un tube 29 contenu dans les fûts interne 28 et externe 25 et qui les traverse de part en part pour aboutit à l'entrée de la goulotte 16. Celle-ci comprend tout d'abord un tube 30 cylindrique, dirigé en biais vers le haut dans la position de départ et horizontal à la position de vidange, qui se termine par une embouchure 31, à angle droit avec lui et dirigée vers le bas dans la position de vidange. Le tube 30 est monté sur une patte 32 fixée au fût externe 25 par l'intermédiaire de ressorts 33. L'extrémité inférieure du tube 30 est reliée au sommet du fût 25 par un manchon élastique 34 qui maintient l'étanchéité à cet endroit. De plus, l'assemblage 35 qui relie le tube 30 au ressort 33 est prolongé au-delà de la patte 32 et se termine en une plaquette 36 fixée à l'embouchure 31 et porteuse d'un vérin 37 et d'un vibreur 38. Le vérin 37 sert à commander l'ouverture d'une vanne à papillon 39 située au travers de l'embouchure 31. Après l'ouverture de la vanne à papillon 39, le vibreur 38 est mis en marche dans la position de vidange pour communiquer des vibrations à toute la goulotte 16, qui permettent à la poudre de progresser le long du tube 30 vers l'embouchure 31. La vidange de la jarre est améliorée en la faisant tourner à vitesse réduite, un tour par minute par exemple, par actionnement du moteur 13. Un capteur de bourrage 40 est prévu avec son élément sensible 41 à l'entrée de l'embouchure 31 : il sert à détecter que la poudre ne s'écoule pas normalement. Il agit alors sur les commandes de rotation de la jarre et de vibration du vibreur pour arrêter leur fonctionnement. On doit préciser que le plateau 11 continue de tourner pendant la vidange pour la faciliter.

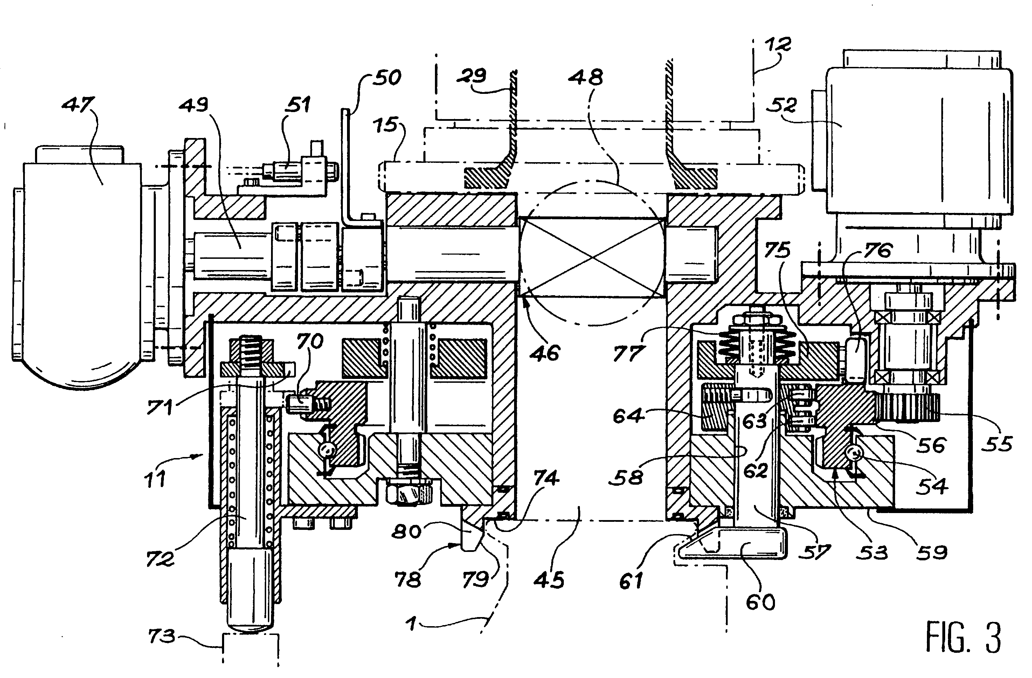

On se reporte maintenant à la figure 3 pour une vue particulière du plateau 11. On y distingue tout d'abord un évidement 45 central et vertical, dans le prolongement de l'évidement 44 du fût externe 25 ; une seconde vanne à papillon 46 barre cet évidement 45 sous la roue dentée 15 ; un autre moteur 47 commande cette vanne 46 en faisant tourner le papillon 48, et de plus un arbre moteur 49 commande la rotation d'une fiche 50 devant des détecteurs 51 dont un seul est représenté et qui indiquent, en détectant la présence de la fiche 50 devant eux si le papillon 48 est ouvert, fermé ou dans un état intermédiaire.

On trouve encore un autre moteur 52 monté sur le plateau 11 ; il sert à commander la rotation d'une couronne 53 montée horizontalement dans une portion inférieure du plateau 11 par l'intermédiaire d'un roulement à billes 54 ; le pignon 55 du moteur 52 engrène avec une périphérie dentée 56 de cette couronne 53.

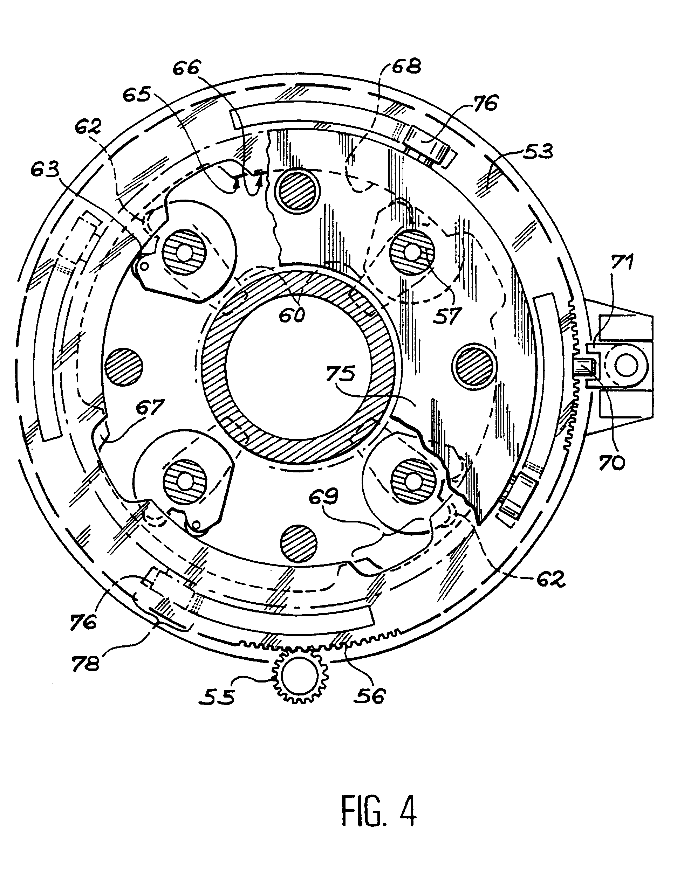

Le moteur 52 et la couronne 53 sont responsables du déplacement de pivots 57 engagés à travers des perçages 58 du plateau 11 et dont l'extrémité inférieure, dépassant de la face inférieure 59 du plateau, porte quatre griffes 60 (dont une seule est représentée sur la figure) respectivement destinées à s'introduire sous le col 61 de la jarre 1 et à le retenir contre la machine 3. Les griffes 60 sont des taquets horizontaux placés de façon excentrée sur les pivots 57, et qu'il suffit donc de tourner d'une portion de tour pour les placer soit en position de convergence ou de saisie de la jarre 1, dans laquelle elles sont dirigées les uns vers les autres, soit dans une position d'effacement correspondant au relâchement de la jarre 1. Ce mouvement est commandé pour chaque griffe 60 par deux galets superposés 62 et 63 montés dans une rondelle 64 fixée au pivot 57 et qui roulent le long de deux cames horizontales et circulaires 65 et 66 superposées, mieux visibles à la figure 4. La came inférieure 65 est composé de saillies inférieures 67 d'une dizaine de degrés d'extension angulaire, une par pivot 57, alors que la came supérieure 66 comprend d'autres saillies 68, en arc de cercle mais beaucoup plus larges, de 60° environ d'extension angulaire, dont chacune recouvre une moitié de saillie inférieure 67.

L'état représenté à la figure 4 correspond à la position de convergence ou de serrage par les griffes 60. Si on veut retrouver la condition de relâchement, il faut faire tourner la couronne 53 dans le sens des aiguilles d'une montre d'environ 60° : les saillies inférieures 67 atteindront bientôt les galets inférieurs 62 et les repousseront, ce qui provoquera la rotation des pivots 57. Les saillies supérieures 68 se seront juste auparavant dérobées sous les galets inférieurs 63, qui pourront donc plonger au fond des intervalles 69 de la came supérieure 66 situés entre les saillies supérieures 68. On s'aperçoit que les galets inférieurs 62 et la came inférieure 65 servent à commander la rotation des pivots 57, alors que les galets supérieurs 63 et la came supérieure 66, et plus précisément les saillies 68 de celle-ci, servent à maintenir les griffes 60 en position de convergence et à empêcher ainsi le relâchement accidentel des jarres 1. De plus, la couronne 53 est pourvue d'un pion 70 qui interrompt sa denture ; à la fin de la rotation, il arrive devant une fourchette 71 qui coulisse verticalement devant lui, car elle est fixée au bout d'une tige coulissante 72 dont l'extrémité inférieure dépasse sous le plateau 11. Cette extrémité est repoussée par un élément 73 de la première voie de transport 2 quand la jarre 1 est soulevée vers la machine 3 ; la tige 72 et la fourchette 71 sont alors elles aussi soulevées, ce qui dégage le pion 70 et permet de tourner la couronne 53 pendant cette période qui correspond à l'immobilisation de la jarre sur la machine 3 ou au contraire à son relâchement ; le plateau 11 est soulevé, la fourchette 71 retombe sur le pion 70, l'immobilise et interdit de déplacer par inadvertance ou accident la couronne 53. Les griffes 60 restent donc en position de convergence.

On remarque cependant que, dans la position de la figure 3 qui illustre une position d'amorce de convergence des griffres 60, les griffes ne sont pas encore au contact du col de jarre 61, c'est-à-dire qu'elles ne peuvent pas le maintenir contre le bord 74 inférieur de l'évidement 45, ce qui est pourtant indispensable pour s'opposer aux fuites de poudre pendant la vidange. C'est pourquoi le mécanisme précédemment décrit doit être complété : les pivots 57 sont portés par un disque 75 disposé au-dessus de la couronne 53 et qui porte des galets 76 roulant sur elle ; et plus précisément, comme on le voit à la figure 4, les galets 76 roulent sur des surfaces de came 77 en arc de cercle établis au sommet de la couronne 53, et qui ont une hauteur croissante dans le sens des aiguilles d'une montre pour s'achever en un plateau d'extrémité 78 qui correspond à une élévation extrême du disque 75, obtenue à la fin de la course des griffes 60 et qui donne le serrage souhaité de la jarre 1 du serrage des griffes 60. Dans cette position extrême, les griffes, soulevées par rapport à l'état de la figure 3, soulèvent le col de jarre 61 et le pressent sous le bord d'évidement 74. Une certaine élasticité est offerte par des ressorts 77 par lesquels les pivots 57 sont suspendus au disque 75 et qui permettent de régler l'effort de serrage du col de jarre 61.

L'arrêt des griffes 60 en rotation peut être commandé par des ergots 78 entourant comme elles l'évidement 45 et dont une fonction essentielle est de permettre le centrage des jarres 1 grâce à des surfaces internes coniques 79 contre lesquelles le col de jarre 61 frotte. Les griffes 60 viennent de leur côté buter contre des faces latérales 80 de ces ergots 18.

Le procédé peut être largement automatisé à l'aide de détecteurs non représentés mais analogues au détecteur 51 donné dans la description comme exemple à ce propos : on peut disposer de tels détecteurs pour vérifier la présence d'une jarre 1 sous la face inférieure 59, ou pour suivre la rotation de la couronne 53 ou le basculement du corps 12 ; le déroulement correct du transfert de la poudre est alors vérifié à tout instant, et les opérations ne sont poursuivies que si aucune anomalie est détectée. En particulier, l'ouverture de la vanne 46 peut être subordonnée à cette condition.

L'invention peut trouver emploi dans les industries nucléaires et pharmaceutiques, où des échantillons doivent être transportés dans des installations étanches : elle permet alors d'accomplir des manipulations difficiles depuis l'extérieur, et soulage donc la tâche des opérateurs.

## Revendications

1. Dispositif de transfert et de mélange de produits pulvérulents contenus dans des jarres (1), comprenant un corps (12) monté de façon à basculer autour d'un axe horizontal (26) sous l'impulsion d'un premier moteur (17) ; un plateau (11) et une goulotte (16) de distribution montées à deux extrémités opposées du corps (12), le corps (12) pouvant basculer entre une position où le plateau est située sous le corps et une position où la goulotte s'étend sous le corps (12) et la jarre (1), et le corps étant traversé par un évidement (44) s'étendant d'une des extrémités à l'autre ; et une vanne (46) permettant d'ouvrir et de fermer l'évidement ; **caractérisé en ce que** le plateau est traversé par un évidement (45) s'étendant d'une face située devant le corps (12) à une face porteuse de griffes (60) de saisie d'un col de jarre, les évidements (44, 45) étant en prolongement ; et **en ce que** le dispositif comprend un deuxième moteur (13) faisant tourner le plateau (11) autour d'un axe aligné avec l'évidement de plateau.

2. Dispositif selon la revendication 1, **caractérisé en ce que** la goulotte est montée sur le corps par l'intermédiaire d'un système vibreur (38).

3. Dispositif selon la revendication 1, **caractérisé en ce que** les griffes (60) sont montées sur des pivots (57) reliés à une couronne (53) tournant dans le plateau (11) sous l'effet d'un troisième moteur (52) par des galets (62, 63, 76) et des cames (65, 66, 77) qui permettent de basculer les griffes entre une position d'effacement et une position de convergence où la jarre (1) est retenue sur le dispositif, et entre une position abaissée simultanée à la position d'effacement et une position de serrage simultanée à la position de convergence où la jarre est soulevée et pressée contre le plateau autour de l'évidement.

4. Dispositif selon la revendication 3, **caractérisé par** un système de verrouillage de la couronne opérant en position de serrage et comprenant une tige (72) soulevée par la jarre et porteuse d'une fourchette (71) encadrant une saillie (70) de la couronne (53).

5. Dispositif selon la revendication 1, **caractérisé en ce que** la goulotte comprend une vanne (39) au bout et un capteur de bourrage (40, 41).

6. Dispositif selon la revendication 1, **caractérisé en ce que** l'évidement (45) du plateau (11) est prolongé par un tube (29) traversant l'évidement (44) du corps (12) et débouchant dans la goulotte (16).

7. Dispositif selon la revendication 1, **caractérisé en ce que** le corps est monté sur un châssis élévateur (8).

8. Dispositif selon la revendication 1, **caractérisé par** des ergots de centrage (68) de la jarre disposés autour de l'évidement (45) de plateau et que les griffes (60) touchent en position de convergence.

9. Dispositif selon la revendication 1, **caractérisé en ce que** le corps comprend deux parties coaxiales (25, 28) reliées par le deuxième moteur (13) et par des roulements (27), une desdites parties, à laquelle le plateau (11) est monté, étant interne et tournante

10. Dispositif selon la revendication 9, **caractérisé en ce que** la partie interne contient un tube (29) qui traverse ladite partie interne et s'étend du plateau (11) à la goulotte (16).

## Claims

1. Device for the transfer and mixing of pulverulent products contained in jars (1), comprising a body (12) installed so as to swing about a horizontal axis (26) under the impulsion of a first motor (17), a plate (11) and a distribution chute (16) being installed at two opposite ends of the body (12), which can swing between a position where the plate is located beneath the body and a position where the chute extends beneath the body (12) and the jar (1), the body being traversed by a recess (44) extending from one of its ends to the other and a valve (46) permitting the opening and closing of the recess, **characterized in that** the plate is traversed by a recess (45) extending from a face located in front of the body (12) to a face carrying grips (60) for grasping the jar neck, the recesses (44, 45) being in extension of one another and that the device has a second motor (13) rotating the plate (11) about an axis aligned with the plate recess.

2. Device according to claim 1, **characterized in that** the chute is installed on the body by means of a vibrator system (38).

3. Device according to claim 1, **characterized in that** the grips (60) are installed on pivots (57) connected to a ring (53) rotating in the plate (11) under the effect of a third motor (52) by rollers (62, 63, 76) and cams (65, 66, 77) making it possible to swing the grips between a retracted position and a convergence position, where the jar (1) is retained on the device, and between a lowered position corresponding to the retracted position and a locking position corresponding to the convergence position where the jar is raised and pressed against the plate around the recess.

4. Device according to claim 3, **characterized by** a locking system for the; ring bringing about a securing position and having a rod (72) raised by the jar and carrying a fork (71) surrounding a projection (70) of the ring (53).

5. Device according to claim 1, **characterized in that** the chute has a valve (39) at the end and a jamming sensor (40, 41).

6. Device according to claim 1, **characterized in that** the recess (45) of the plate (11) is extended by a tube (29) traversing the recess (44) of the body (12) and issuing into the chute (16).

7. Device according to claim 1, **characterized in that** the body is mounted on the elevator chassis (8).

8. Device according to claim 1, **characterized by** jar centring studs (68) arranged around the plate recess (45) and the grips (60) touch in the convergence position.

9. Device according to claim 1, **characterized in that** the body has two coaxial parts (25, 28) connected by the second motor (13) and by bearing blocks (27), one of said parts on which the plate (11) is mounted is internal and rotary.

10. Device according to claim 9, **characterized in that** the internal part contains a tube (29) traversing said internal part and extending from the plate (11) to the chute (16).

## Patentansprüche

1. Misch- und Übergabevorrichtung für Schüttgut, enthalten in Behältern (1), einen Hauptteil (12) umfassend, derart montiert, dass er, angetrieben durch einen ersten Motor (17), um eine horizontale Achse (26) schwenken kann, sowie eine Grundplatte (11) und eine Versorgungsrutsche (16) umfassend, die an den beiden entgegengesetzten Enden des Hauptteils (12) angebracht sind, wobei der Hauptteil (12) schwenken kann zwischen einer Stellung in der die Grundplatte sich unter dem Gehäuse befindet, und einer Stellung in der die Rutsche sich unter dem Hauptteil (12) und dem Behälter (1) erstreckt, wobei der Hauptteil von einem Hohlraum (44) durchquert wird, der sich von einem Ende zum andern erstreckt und ein Ventil bzw. Schieber (46) ermöglicht, den Hohlraum zu öffnen und zu schließen,
**dadurch gekennzeichnet,**
**dass** die Grundplatte von einem Hohlraum (45) durchquert wird, der sich von einer vor dem Hauptteil (12) befindlichen Seite bis zu einer Seite erstreckt, die Klauen (60) zum Ergreifen eines Behälterhalses umfasst, wobei die Hohlräume (44, 45) sich gegenseitig verlängern, und dadurch, dass die Vorrichtung einen zweiten Motor (13) umfasst, der die Grundplatte (11) in eine Drehbewegung um eine entsprechend dem Hohlraum der Grundplatte ausgerichteten Achse versetzt.

2. Vorrichtung nach Anspruch 1, **dadurch gekennzeichnet, dass** die Rutsche mittels eines Vibrationssystems (38) auf den Hauptteil montiert ist.

3. Vorrichtung nach Anspruch 1, **dadurch gekennzeichnet, dass** die Klauen (60) auf Schwenkachsen (57) montiert sind, die verbunden sind mit einem Ring (53), der sich, angetrieben durch einen dritten Motor (52), in der Grundplatte (11) mittels Rollen (62, 63, 76) dreht, wobei Nocken (65, 66, 77) ermöglichen, die Klauen zu schwenken zwischen einer zurückgeschwenkten Stellung und einer Konvergenz-Stellung, wo der Behälter (1) von der Vorrichtung festgehalten wird, und zwischen einer mit der zurückgeschwenkten Stellung simultanen Tiefstellung und einer mit der Konvergenz-Stellung simultanen Klemmstellung, wo der Behälter angehoben und gegen die Grundplatte gepresst wird, um den Hohlraum herum.

4. Vorrichtung nach Anspruch 3, **gekennzeichnet durch** ein Verriegelungssystem des Rings, das in der Klemmstellung wirksam ist und eine Stange (72) umfasst, die von dem Behälter angehoben wird und eine Gabel (71) aufweist, die einen Vorsprung (70) des Rings (53) umrahmt bzw. umgibt.

5. Vorrichtung nach Anspruch 1, **dadurch gekennzeichnet, dass** die Rutsche einen Verstopfungsfühler (40, 41) und am Ende ein Ventil bzw. einen Schieber (39) umfasst.

6. Vorrichtung nach Anspruch 1, **dadurch gekennzeichnet, dass** der Hohlraum (45) der Grundplatte (11) durch ein Rohr (29) verlängert wird, das den Hohlraum (44) des Hauptteils (12) durchquert und in der Rutsche (16) mündet.

7. Vorrichtung nach Anspruch 1, **dadurch gekennzeichnet, dass** der Hauptteil auf ein Hebegestell (8) montiert ist.

8. Vorrichtung nach Anspruch 1, **gekennzeichnet durch** Zentrierungsvorsprünge (68) des Behälters, die um den Hohlraum (45) der Grundplatte herum angeordnet sind und die die Klauen (60) in der Konvergenz-Stellung berühren.

9. Vorrichtung nach Anspruch 1, **dadurch gekennzeichnet, dass** der Hauptteil zwei koaxiale Teile (25, 28) umfasst, verbunden durch den zweiten Motor (13) und durch Wälzlager (27), wobei eines der genannten Teile, an dem die Grundplatte (11) befestigt ist, intern und drehbar ist.

10. Vorrichtung nach Anspruch 9, **dadurch gekennzeichnet, dass** das interne Teil ein Rohr (29) umfasst, das das genannte interne Teil durchquert und sich von der Grundplatte (11) bis zu der Rutsche (16) erstreckt.
